# EUROPEAN PATENT SPECIFICATION

(11) **EP 4 297 579 B1**
(45) Date of publication and mention of the grant of the patent: **18.11.2026**
(21) Application number: 22707706.2
(22) Date of filing: 23.02.2022
(51) Int. Cl.: A23D 7/00, A23D 7/005, A23D 7/02

(54) **SPREAD COMPOSITION COMPRISING STEROLS**
STREICHMITTELZUSAMMENSETZUNG MIT STEROLEN
COMPOSITION À ÉTALER COMPRENANT DES STÉROLS

(30) Priority: 23.02.2021 EP 21158745
(43) Date of publication of application: 03.01.2024
(73) Proprietor: Flora Food Global Principal B.V., 1083 HK Amsterdam (NL)
(72) Inventor: TIJSSEN, Renske Leonarda Margriet, 1083 HK Amsterdam (NL); DOL, Georg Christian, 1083 HK Amsterdam (NL); SCHUURBIERS, Johan Alphons Eric, 1083 HK Amsterdam (NL)
(74) Representative: EP&C
(86) International application number: PCT/EP2022/054532
(87) International publication number: WO 2022/180098

(56) References cited:
- WO-A1-03/055324
- WO-A1-2019/129929
- US-A1- 2005 175 745

## Description

The present invention relates to a method of preparing an edible fat-continuous emulsion comprising plant sterol esters as well as a fat-continuous emulsion.

### BACKGROUND OF THE INVENTION

Edible fat containing spreads like low fat spreads are well known food products that typically comprise a continuous fat phase and a dispersed aqueous phase.

The fat phase of edible fat continuous spreads comprises a mixture of liquid oil (i.e. fat that is liquid at ambient temperature) and fat which is solid at ambient temperatures. The solid fat, also called structuring fat or hard stock fat, serves to structure the fat phase by forming a fat crystal network. It also helps to stabilize the emulsion. The droplets of the aqueous phase are fixed within the spaces of the lattice of solid fat crystals. This prevents coalescence of the droplets and separation of the heavier aqueous phase from the fat phase.

For an edible fat-continuous spread, ideally the structuring fat has such properties that it melts or dissolves at mouth temperature. Otherwise the product may have a heavy and/or waxy mouthfeel. An important indicator is the temperature at which a spread (i.e. a water in oil emulsion) breaks up in the mouth. Preferably this 'break up temperature' is below the in-mouth temperature. Furthermore, the overall organoleptic impression should be smooth and preferable no perceivable grains should be present upon ingestion as this may result in what is generally known as a 'sandy mouthfeel'.

Other important aspects of an edible fat-continuous spread are for example hardness, spreadability, storage stability and ability to withstand temperature cycling. Temperature cycling means that the product is subjected to low and high temperatures (e.g. when the consumer takes the product out of the refrigerator and leaves it for some time at the table prior to use). This may have a negative influence on the structure of the spread (like for example destabilization of the emulsion, oil-exudation or crystal growth).

Generally, edible fat-continuous food products like for example margarines and similar edible fat-continuous spreads are prepared according to known processes that encompass the following steps:
1. Mixing of the liquid oil, the structuring fat and if present the aqueous phase at a temperature at which the structuring fat is liquid;
2. cooling of the mixture under high shear to induce crystallization of the structuring fat to create an emulsion;
3. formation of a fat crystal network to stabilize the resulting emulsion and give the product some degree of firmness;
4. modification of the crystal network to produce the desired firmness, confer plasticity and reduce the water droplet size.

These steps are usually conducted in a process that involves apparatus that allow heating, cooling and mechanical working of the ingredients, such as the churn process or the votator process. The churn process and the votator process are described in the Ullmans Encyclopedia, Fifth Edition, Volume A 16, pages 156-158. The choice of fats that can practically be used as structuring agent may be limited. If the melting point of the structuring agent is too high the melting properties in the mouth are unsatisfactory. If on the other hand, the melting point is too low, the emulsion stability will be negatively affected.

Alternative processes have been described wherein the structuring fat is added as fat powder (i.e. crystallized fat or fat crystals) thereby eliminating the need to heat the whole composition to above the melting temperature of the structuring fat.

Plant sterols are well known cholesterol lowering agents. The benefit of these ingredients to reduce the risk to cardiovascular diseases has been established for years. Where these active ingredients were initially available in the form of capsules and other pharmaceutical preparations only, over the years they have also become available in food products. The incorporation of these active ingredients in food products that are consumed daily enables the easy and reliable intake of these ingredients for many people.

Plant sterols can be classified in three groups, 4-desmethylsterols, 4-monomethylsterols and 4,4'-dimethylsterols. In oils they mainly exist as free sterols and sterol esters of fatty acids although sterol glucosides and acylated sterol glucosides are also present. There are three major phytosterols namely beta-sitosterol, stigmasterol and campesterol. Schematic drawings of the components meant are as given in "Influence of Processing on Sterols of Edible Vegetable Oils", S. P. Kochhar; Prop. Lipid Res. 22: pp. 161-188.

The respective 5 alpha-saturated derivatives such as sitostanol, campestanol and ergostanol and their derivatives are referred to as plant stanol. For the purpose of the present invention the term 'plant sterol' is defined to mean plant sterol, plant stanol and mixtures thereof.

Plant sterols and stanols as such are difficult to formulate into food products due to their poor solubility in oil and immiscibility with water which may result in food products having poor organoleptic properties, e.g. a sandy mouth feel. This made the choice of food products suitable for incorporation of plant sterols and stanols initially very limited. To overcome this drawback plant sterols and stanols have been modified to improve their solubility in the fat phase of food products. The most common modification of plant sterols and stanols is to their corresponding fatty acid esters (i.e. plant sterol ester and plant stanol ester). It should be noted that commercially available plant sterol esters and plant stanol esters may contain a considerable amount of non-esterified plant sterol and plant stanol as it is not always possible to achieve a degree of esterification of 100%.

Commercial products such as Becel Pro-activ^{™} and Benecol^{™} comprise sterol or stanol fatty acid esters.

The incorporation of plant sterol in food products like for example fat-continuous spreads remains challenging. Plant sterol esters still have a noticeable influence on the organoleptic properties of the food products they are incorporated in. This is especially the case in fat-continuous spreads. For example the plant sterol esters may (negatively) influence the in-mouth melting characteristics or other important organoleptic properties of a fat-continuous spread.

There is an increased interest in providing food products that not only contain desired ingredients such as sterols but also reduce or avoid completely the addition of less desired components such as emulsifiers to increase the 'naturalness' of the formulation. One of these components are mono- and di fatty acid glyceride esters. These components are glycerol molecules that are esterified with one (hence mono) or two (hence di) fatty acid esters. A commercially well-known product is Dimodan, which is available in many varieties. In the art, the mono- and di fatty acid glyceride esters are considered relevant as they aid in the structurization (or crystallisation) process. Especially in low fat products, where there is a relative large aqueous phase, it can be challenge obtain the desired structurization in view of the relative low structurization phase (typically the hard stock). It is therefore considered a challenge to find alternatives for low fat products that do not or only to a minimal content contain mono- and di fatty acid glyceride esters. Typically amounts of mono- and di fatty acid glyceride esters added in food applications are in the area of 0.05-0.3 wt.%.

In the art, fat-continuous emulsions comprising plant sterols and -esters have been described. US2013323395 described the preparation of edible fat-continuous emulsions comprising plant sterol esters in the presence of saturated or unsaturated mono glycerides using a structuring fat in the form of micronized fat powder.

US2013171310 described the preparation of edible fat-continuous emulsions comprising non-esterified sterols in the presence of monoglycerides to obtain a product having crystalline sterol particles.

WO2011080580, WO20132029, US20044166224 describe low fat spreads comprising sterol esters.

US 2005/175745 discloses a water-in-oil spread containing 50-80% liquid oil, 0-5% structuring fat, 9-15% of a product named Reducol, 0.2-1% emulsifiers, 0-10% thickeners and the rest being water. Moreover, it discloses a method for producing said spread wherein the phases are prepared and emulsified.

WO 2019/129929 relates to a food composition to which is added plant sterol and/or stanol to further improve health effects. WO 2019/129929also relates to a method suitable for the production of such composition.

### SUMMARY OF THE INVENTION

The invention is set out in the appended claims.

The present inventors have found that low-fat, fat-continuous spreads can be prepared in essential absence of mono- and di fatty acid glyceride esters when they are formulated in the presence of plant sterol esters. Surprisingly, the inventors found that the functionality that was thought to be provided by the presence of mono- and di fatty acid glyceride esters to (low fat) spreads in terms of stability and droplet size can be substituted by plant sterols.

Accordingly, in a first aspect the disclosure provides for a method of preparing an edible fat-continuous emulsion product such as a spread, comprising:
- 35-80 wt.% of an aqueous phase, and
- 20-65 wt.% of a fat phase,
wherein the fat phase comprises 8-15 wt.% plant sterol esters, calculated on the total composition;
the method comprising the steps of:
   - preparing a mixture comprising at least part of the aqueous phase and at least part of the fat phase; and
   - preparing the emulsion product by emulsifying of the mixture of the aqueous phase and the fat phase,
wherein the emulsion product is substantially free of mono- or di fatty acid glyceride esters.

A further aspect of the disclosure resides in an edible fat-continuous emulsion such as a spread containing 9-15 wt.% sterol esters, wt.% drawn on the total composition and is substantially free of mono- or di fatty acid glyceride esters.

The spread obtained by the method has a desirable size and distribution of water droplets. Smaller water droplet sizes are preferred as this leads to increased microbiological stability and/or aid the firmness of the water-in-oil emulsion. Therefore, the water droplets preferably have a D3,3 (the volume weighted mean droplet diameter) that is lower than 6 and σ (the standard deviation of the logarithm of the droplet diameter) that is lower than 3. This can be achieved by using plant sterols as specified herein, essentially in absence of mono- or di fatty acid glyceride emulsifier. Good emulsions have been prepared over a breadth of processing conditions and compositions.

### DETAILED DESCRIPTION OF THE INVENTION

In the first aspect of the disclosure, it pertains to a method of preparing an edible fat-continuous emulsion product such as a spread, comprising:
- 35-80 wt.% of an aqueous phase, and
- 20-65 wt.% of a fat phase,

wherein the fat phase comprises 8-15 wt.% of the total composition comprises plant sterol esters;
the method comprising the steps of:
   - preparing a mixture comprising at least part of the aqueous phase and at least part of the fat phase; and
   - preparing the emulsion product by emulsifying of the mixture of the aqueous phase and the fat phase,
wherein the emulsion product is substantially free of mono- or di fatty acid glyceride esters.

In preferred embodiments, at least part of the plan sterol ester is added to the mixture of at least part of the aqueous phase and at least part of the fat phase.

In preferred embodiments, wherein at least part of the plan sterol ester is added in the emulsification step.

In preferred embodiments, the mixing is by a combination of one or more scraped heat exchangers (A- units) and cooled pin stirrers (C-units). In further preferred embodiments, the temperature in the last of the one or more scraped heat exchangers is between 4-11, preferably between 4-9, more preferably between 4-7 degrees Celsius. This processing step appears to exert a good structuring influence on the final product.

The edible fat continuous emulsion spread prepared according to the method of the present disclosure comprises 35 to 80 wt.% of a dispersed aqueous phase and 20 to 65 wt.% of a fat phase. In embodiments preferably from 40 to 80 wt.% of a dispersed aqueous phase and 20 to 60 wt.% of a fat phase. More preferably from 45 to 75 wt.% of the aqueous phase and 25 to 55 wt.% of the fat phase and even more preferably 50 to 70 wt. % of the aqueous phase and 30 to 50 wt.% of the fat phase.

Oils and fats meeting specifications for application in food products usually do not contain any significant values of mono- or di fatty acid glycerides. The edible fat continuous emulsion spread prepared according to the method of the present disclosure comprises essentially no mono- or di fatty acid glycerides or at least the amount originating from the constituting fats and oils natural sources is below 0.01 wt.%. More in particular there are no or at most 0.01 wt.% added mono- or di fatty acid glycerides in the edible fat continuous emulsion spread prepared according to the method of the present disclosure. The edible fat continuous emulsion spread prepared according to the method of the present disclosure is in a preferred embodiment further also free from artificial emulsifiers. The product may comprise a natural lecithin. The product may (also) comprise emulsifiers (protein) of dairy origin (milk protein, whey protein etc.).

In certain embodiments, the emulsion product may also comprise 0.1-10 wt.% of a thickener, calculated on the total composition. Examples of thickeners are (modified ) starches, carob.

The low fat, fat-continuous emulsions according to the invention are stable, meet general consumer requirements for spreads in terms of mouthfeel and spreadability.

The low fat, fat-continuous emulsions according to the invention are also stable, in the sense that they allow the presence of a variety of ingredients that typically destabilise emulsions, examples thereof are starches and plant proteins, while maintaining a stable emulsion.

The fat continuous emulsion spread comprises 8 to 15 wt.% of plant sterol (wt.% calculated on the whole composition), preferably 9 to 14 wt.% and more preferably from 10 to 13 wt.%. A typically preferred range is 9-12 wt.%.

The plant sterol esters can be from different origin such as from Pine tree, Canola, Soy, combined Pine tree/canola.

Advantageously, at least 25 wt.% of the fatty acids contained in the plant sterol esters are (un)saturated fatty acids. Even more preferably, at least 25 wt. % of the fatty acids contained in the plant sterol esters are polyunsaturated fatty acids.

It is further preferred to employ plant sterol esters having a low melting point, for example a melting point of less than 70 degrees Celsius, preferably of less than 60 degrees Celsius.

The oil or fat may be a natural (i.e. not modified) or a modified fat or oil to enhance its physical properties. Suitable methods include interesterification. Hydrogenated fats are less preferred.

Trans unsaturated fatty acids are known to have a good structuring capacity but are not preferred as they are associated with cardiovascular disease. Therefore, preferably the fat phase comprises less than 1 wt.%, more preferably less than 0.5 wt.% and even more preferably less than 0.1 wt.% trans unsaturated fatty acid. Trans unsaturated fatty acids are naturally present mainly in fats of animal origin like for example butter fat and butter oil. Partial hydrogenation of liquid vegetable oils may also lead to the presence of trans unsaturated fatty acids. Therefore, the fat blend preferably does not contain partially hydrogenated fats.

The liquid oil may be a single oil or a mixture of two or more oils. Likewise the structuring fat may be a single fat or a mixture of two or more fats. The liquid oil and structuring fat are preferably of vegetable or marine (algae) origin.

Preferably at least 50 wt.% of the liquid oil (based on total amount of liquid oil) is of vegetable origin, more preferably at least 60 wt.%, even more preferably at least 70 wt.%, still more preferably at least 80 wt.%, even still more preferably at least 90 wt.% and even still more further preferably at least 95 wt.%. Most preferably the oil essentially consists of oil of vegetable origin.

Preferably the liquid oil is selected from soybean oil, sunflower oil, rape seed (canola) oil, cotton seed oil, peanut oil, rice bran oil, safflower oil, palm olein, linseed oil, fish oil, high omega-3 oil derived from algae, corn oil (maize oil), sesame oil, palm kernel oil, coconut oil, olive oil and combinations thereof. More preferably the liquid oil is selected from soybean oil, sunflower oil, rape seed oil, linseed oil, palm olein, olive oil and combinations thereof.

The amount of structuring fat is suitably chosen such that the required structuring (e.g. stable emulsion) is obtained. Preferably the amount of structuring fat on total amount of product is 1 to 20 wt.%, more preferably 2 to 18 wt.% and even more preferably 4 to 14 wt.%.

To optimize the structuring capacity and/or impression of the spread in the mouth structuring fats having a certain solid fat content are preferred. Therefore, the structuring fat as present in the edible fat powder preferably has a solid fat content N10 from 50 to 100, N20 from 26 to 95 and N35 from 5 to 60.

Preferably at least 50 wt.% of the structuring fat (calculated on total amount of structuring fat) is of vegetable origin, more preferably at least 60 wt.%, even more preferably at least 70 wt.%, still more preferably at least 80 wt.%, even still more preferably at least 90 wt.% and even still more further preferably at least 95 wt.%. Most preferably the structuring fat essentially consists of fat of vegetable origin.

Preferably the structuring fat is selected from palm fat, allanblackia, pentadesma, shea butter, coconut oil, soybean oil, rapeseed oil, dairy fat and combinations thereof. More preferably the structuring fat is selected from the group consisting of palm oil, palm kernel oil, palm oil fractions, palm kernel fractions, shea, coconut oil, dairy fat fraction and combinations thereof. Even more preferably the structuring fat is selected from the group consisting of palm oil, palm kernel oil, palm oil fraction, palm kernel fraction, shea, coconut oil and combinations thereof. The fat may have been subjected to chemical interesterification processes or enzymatic re-arrangement applications.

Preferably at least 50 wt.% of the combined amount of liquid oil and structuring fat of the total fat blend is of vegetable origin, more preferably at least 60 wt.%, even more preferably at least 70 wt.%, still more preferably at least 80 wt.%, even still more preferably at least 90 wt.% and even still more further preferably at least 95 wt.%. Most preferably the combined amount of liquid oil and structuring fat essentially consists of fat of vegetable origin.

The product further comprises additional components such as plant proteins. Plant based proteins may provide desired protein content to spread and provide non- dairy products that are also attractive for a vegan diet. Preferred plant proteins are the plant based protein from from Broad bean (Vicia faba), Chickpea (Cicer arietinum), Lentil (Lens culinaris), Canola (B. napus subsp. napus) and/or almond (Prunus dulcis, syn. Prunus amygdalus), preferably Broad bean (Vicia faba).

The plant-based protein is in the form of an plant-based protein isolate or concentrate. The plant based protein may be provided in an amount of 0.1-10 wt.% drawn on the total composition.

The fat continuous spread obtainable by the method according to the present invention have the same organoleptic characteristics compared to fat continuous spreads identical in composition but prepared with mono and diglycerides fatty acid esters.

Therefore, another aspect of the disclosure relates to an edible fat continuous emulsion comprising 40 to 80 wt.% of an aqueous phase and 20 to 60 wt.% of a fat phase, wherein the fat phase comprises 8-15 wt.% plant sterol esters, calculated on the total composition.

The invention is now illustrated by the following non-limiting examples.

### Examples

### Water Droplet Size Distribution of Spreads (D3,3 Measurement)

The normal terminology for Nuclear Magnetic Resonance (NMR) is used throughout this method. On the basis of this method the parameters D3,3 and exp(σ) of a lognormal water droplet size distribution can be determined. The D3,3 is the volume weighted mean droplet diameter and σ is the standard deviation of the logarithm of the droplet diameter. A D3,3 < 6 is acceptable for a low fat spread, but a D3,3 < 4 is preferred. A e-sigma of < 3 is desired.

The NMR signal (echo height) of the protons of the water in a water-in-oil emulsion are measured using a sequence of 4 radio frequency pulses in the presence (echo height E) and absence (echo height E*) of two magnetic field gradient pulses as a function of the gradient power. The oil protons are suppressed in the first part of the sequence by a relaxation filter. The ratio (R=E/E*) reflects the extent of restriction of the translational mobility of the water molecules in the water droplets and thereby is a measure of the water droplet size. By a mathematical procedure-which uses the log-normal droplet size distribution-the parameters of the water droplet size distribution D3,3 (volume weighed geometric mean diameter) and σ (distribution width) are calculated.

A Bruker magnet with a field of 0.47 Tesla (20 MHz proton frequency) with an air gap of 25 mm is used (NMR Spectrometer Bruker Minispec MQ20 Grad, ex Bruker Optik GmbH,DE).

### Spreadibility

Spreadibility is determined according to the following protocol.

A flexible palette knife is used to spread a small amount of the spread on to fat free paper. The spreading screen is evaluated according to standardized scaling. A score of 1 represents a homogeneous and smooth product without any defects, a 2 refers to the same product but then with small remarks as slightly inhomogeneous or some vacuoles, a 3 refers to the level where defects become almost unacceptable, like loose moisture or coarseness during spreading. A score of 4 or 5 refers to unacceptable products, where the 4 refers to a product still having some spreading properties, but an unacceptable level of defects.

### Free Water

After spreading a sample of a fat spread, the stability of the emulsion after spreading is determined by using indicator paper (Wator, ref 906 10, ex Machery-Nagel, DE) which develops dark spots where free water is adsorbed.

A stable product does not release any water and the paper does not change.

Very unstable products release free water easily and this is indicated by dark spots on the paper.

A six point scale is used to quantify the quality of fat spread (DIN 10 311):
0 (zero) is a very stable and good product;
1 (one) is showing some loose moisture (one or two spots, or the paper changes a little in color as a total);
2 (two) as one but more pronounced;
3 (three) as one but to an almost unacceptable level;
4 (four) indicator paper is almost fully changing into a darker color;
5 (five) the paper changes completely and very fast into the maximum level of color intensity.

Spreads with a score of 4 or 5 are rejected for their stability. Spreads with a score of 0 or 1 show an acceptable quality with respect to free water.

### Salt Release

The salt release is expressed as increasing of conductivity per degree Celsius. The salt release is measured with a conductivity meter type H14321 (HANNA) according the following protocol.

A sample hold cell type ESE4-10-50PAMA (FESTO) is filled with 1.5 gram of the sample (5 degrees Celsius). The cell is placed above a heating plate (having a temperature of 250 degrees Celsius). A glass beaker (Scott Duran) provided with magnetic stirrer [4×200 mm] is filled with 150 gram water (5 degrees Celsius) and placed on a heating plate (stirring speed 600 rpm). Simultaneously the software controlled measurement is started (Raak Lab Informatics BV). When the water has reached a temperature of 20 degrees Celsius the sample is pushed out of the sample hold cell into the beaker automatically and the conductivity versus temperature will be measured every second. When the content of the beaker reaches 75 degrees Celsius the measurement is stopped. The measurement is done in duplicate. The results are incorporated in a graph of temperature versus conductivity. From this graph the temperature at which the conductivity starts to increase rapidly, indicating release of salt from the sample, is determined. The temperature at which the conductivity has increased 41 micro-s from the baseline is defined as the salt release temperature.

Fat continuous spreads according to the invention without mono and diglycerides fatty acid esters ) and comparative examples (with mono and diglycerides fatty acid esters; Ex 1-5, 8, and 15-20), not according to the invention, were prepared with the composition as in Table 1.

All examples were prepared using a microvotator with an AAAC sequence using the settings as in Table 2.

### Preparation of a spread

The fat phase and the aqueous phase were mixed and kept at 55-65 degrees Celsius. The mixtures was then passed through a series of scraped surface heat exchangers (A -units) and stirred crystallisers (C-units) at various speeds. The product leaving the last unit had a temperature of 5-7 degrees Celsius. The product was filled in tubs and stored at 5 degrees Celsius. A stable spread was obtained. Various products were prepared. The results are presented in table 1.

The following fat blends were used:

| **Structuring fat** | **composition** |
|---|---|
| erti550 (non palm HS) | er(50SHs/50CN) |
| erti890 (non palm HS) | er(75SHs/25CN) |
| inES63 (non palm HS) | in(70SHs/30CN) |
| eres48 | er(65mfPOs14iv/35PK) |
| eres30 | er(50PO /10dfPOs/40 PK) |
| mfPof45 | Palm oil fraction IV45 (multi, dry fractionated) |

| **Table 1** | | | | | | | | | | |
|---|---|---|---|---|---|---|---|---|---|---|
| **Ex.** | **fat level (wt.%)** | **Structuring fat (wt.%)** | **Oil (wt.%) ⁵⁾** | **Plant sterols²⁾** | **Lecithine⁷⁾** | **Processing ⁶⁾** | **Other ingredients ⁴⁾** | **mono and diglycerides** | **D3,3** | **e-sigma** |
| **1** | 55¹⁾ | 13,2 inES63 | 37.4 | 11% | 0,25% Sunlec M | Water | no | no | 2,2 | 1,6 |
| **2** | 55¹⁾ | 13,2 inES63 | 37.4 | 11% | 0,25% Sunlec Z | Fat | no | no | 3,25 | 1,59 |
| **3** | 50% | 12 inES63 | 38 | | 0,12% Sunlec Z | Water | no | no | 7,4 | 2,3 |
| **4** | 40¹⁾ | 9,6 inES63 | 26 | 11% | 0,1% Sunlec M | Water | no | no | 3,16 | 1,76 |
| **5** | 40¹⁾ | 8 inES63 | 27.6 | 11% | 0,1% Sunlec M | Water | no | no | 3,33 | 1,56 |
| **6** | 40¹⁾ | 9 inES63 | 26.6 | 11% | 0,1% Sunlec M | Water | 1,35% starch + 0,3% Faba³⁾ | no | 4,8 | 2,43 |
| **7** | 40¹⁾ | 9,6 inES63 | 26 | 11% | 0,1% Sunlec M | Water | 0,3% Faba | no | 4,72 | 2,58 |
| **8** | 35¹⁾ | 2,67 eres48 / 3,0 eres30 / 1,5 mfPof45 | 23.43 | 11% | 0,1% Sunlec M | Water | no | no | 2,9 | 1,6 |
| **9** | 35¹⁾ | 2,67 eres48 / 3,0 eres30 / 1,5 mfPof45 | 23.43 | 11% | 0,1% Sunlec M | Water | 0,2% Faba | no | 4,4 | 2,1 |
| **10** | 55¹⁾ | 13,2 inES63 | 37.4 | 11% | 0,25% Sunlec M | Water | 0,2% Faba | no | 3,36 | 1,82 |
| **11** | 40¹⁾ | 9 inES63 | 26.6 | 11% | 0,1% Sunlec M | Water | 0,1% Faba | no | 4,32 | 2,28 |
| **12** | 40¹⁾ | 9 inES63 | 26.6 | 11% | 0,1% Sunlec M | Water | 0,1% Faba | 0,2 dimodan HP | 3,24 | 1,89 |
| **13** | 40¹⁾ | 9 inES63 | 26.6 | 11% | 0,1% Sunlec M | Water | 1,35% starch + 0,3% Faba | no | 4,8 | 2,43 |
| **14** | 40¹⁾ | 9 inES63 | 26.6 | 11% | 0,1% Sunlec M | Water | 1,35% starch + 0,3% Faba | 0,2 dimodan HP | 3,45 | 2,20 |
| **15** | 50% | 12 erti550 | 38 | no | 0,12% Sunlec Z | Fat | no | 0,12 dimodan HP | 6 | 1,5 |
| **16** | 50% | 12 erti550 | 38 | no | 0,12% Sunlec Z | Fat | no | no | 11 | 3,2 |
| **17** | 50% | 7.5 erti550 / 5 erti890 | 37.5 | no | 0,12% Sunlec Z | Fat | no | 0,12 dimodan HP | 5,6 | 1,5 |
| **18** | 50% | 7.5 erti550 / 5 erti890 | 37.5 | no | 0,12% Sunlec Z | Fat | no | no | 7,4 | 2,2 |
| **19** | 50% | 12 inES63 | 38 | no | 0.25% Sunlec M | Water | no | 0.12 dimodan HR | 4.5 | 2.4 |
| **20** | 50% | 12 inES63 | 38 | no | 0.25% Sunlec M | Water | no | no | 4.7 | 3.4 |
| **21** | 50% | 12 inES63 | 38 | no | 0.12% Sunlec Z | Water | no | no | 7.4 | 2.3 |

| | | | | | | | | | | |
|---|---|---|---|---|---|---|---|---|---|---|
| 1) Including plant sterol esters 2) 60% sterols and 40% esters, esters content included in the fat content. F&O SIE Wood min 75/RP max 25 SF FA. 3) Faba: Faba bean Protein isolate obtained from AGT Foods, Canada 4) All formulations contain 0.5 wt.% salt 5) Various oils and blends of sunflower, rapeseed and linseed oil were used 6) Water=water continuous, fat = fat-continuous 7) Sunlec Z = Native sunflower lecithin; Sunlec M Partially hydrolyzed sunflower lecithin | | | | | | | | | | |

| **Table 2** | | | | | | |
|---|---|---|---|---|---|---|
| **Example** | **Sequence** | **Flow** | **T AAA (C)** | **Pressure (bar)** | **RPM A-C** | **visual inspection of appearance and texture** |
| **1** | AAAC 1,5 | 100 | 18-12-5 | 8 | 1000-1400 | good |
| **2** | AAAC 1,5 | 100 | 20-16-8 | 5,5 | 1000-1400 | good |
| **3** | AAAC | 140 | 21-12-6 | | | good |
| **4** | AAAC 1,5 | 100 | 18-12-7 | | 1000-1000 | good |
| **5** | AAAC 1,5 | 100 | 18-12-7 | 7,5 | 1000-1000 | good |
| **6** | AAAC 1,5 | 100 | 16-12-6 | | 1000-1400 | good |
| **7** | AAAC 1,5 | 100 | 18-13-6 | | 1000-1400 | good |
| **8** | AAAC 1,5 | 100 | 26-17-9 | | 1000-1400 | good |
| **9** | AAAC 1,5 | 120 | 22-13-6 | | 1000-800 | good |
| **10** | AAAC 1,5 | 80 | 26-17-9 | | 1000-200 | good |
| **11** | AAAC 1,5 | 120 | 18-13-8 | 11 | 1000-1400 | good |
| **12** | AAAC 1,5 | 120 | 18-13-8 | 12 | 1000-1400 | good |
| **13** | AAAC 1,5 | 100 | 16-12-6 | | 1000-1400 | good |
| **14** | AAAC 1,5 | 100 | 16-12-6 | 12 | 1000-1400 | good |
| **15** | AAAC 1,5 | 100 | 23-6-10 | 6 | 1000-1000 | very soft |
| **16** | AAAC 1,5 | 100 | 25-15-10 | 5 | 1000-1000 | soft |
| **17** | AAAC 1,5 | 100 | 23-16-10 | 7,5 | 1000-1000 | soft |
| **18** | AAAC 1,5 | 140 | 23-12-8 | 9 | 1000-1000 | good |
| **19** | AAAC 1,5 | 90 | 20-14-8 | | 1000-1200 | good |
| **20** | AAAC 1,5 | 90 | 20-14-8 | | 1000-1200 | |
| **21** | AAAC 1,5 | 140 | 21-12-6 | | | Result not available |

## Claims

1. Method of preparing an edible fat-continuous emulsion product such as a spread, comprising:
- 45-80 wt.% of an aqueous phase,
- 20-55 wt.% of a fat phase, and
- a plant protein,
wherein the fat phase comprises 8-15 wt.% plant sterol esters and 1 to 20 wt.% of a structuring fat, wt. % calculated on the total product;
the method comprising the steps of:
- preparing a mixture comprising the aqueous phase and the fat phase; and
- preparing the emulsion product by emulsifying of the mixture of the aqueous phase and the fat phase, wherein the emulsion product does not contain more than 0.01 wt.% of added mono- or di fatty acid glyceride esters.

2. Method according to claim 1, wherein at least part of the plant sterol ester is added to the mixture of the aqueous phase and the fat phase.

3. Method according to claim 1 or 2, wherein at least part of the plant sterol ester is added in the emulsification step.

4. Method according to claims 1-3, wherein the product comprises a natural emulsifier.

5. Method according to claims 1-4, wherein the plant protein is selected from the group consisting of Broad bean (Vicia faba), Chickpea (Cicer arietinum), Lentil (Lens culinaris), Canola (B. napus subsp. napus) and/or almond (Prunus dulcis, syn. Prunus amygdalus).

6. Method according to claims 1-5, wherein the product further comprises 0.1-10 wt.% of a thickener, calculated on the total composition.

7. Method according to claims 1-6, wherein the mixing is by a combination of one or more scraped heat exchanger and cooled pin stirrers.

8. Method according to claims 1-7, wherein the temperature in the last of the one or more scraped heat exchangers is between 4-11, preferably between 4-9, more preferably between 4-7 degrees Celsius.

9. Edible fat product such as a spread comprising
- 45 - 80 wt.% of an aqueous phase and
- 20 - 55 wt.% of a fat phase, the fat phase comprising 8-15 wt.% of plant sterol esters and 1 to 20 wt.% of a structuring fat, wt.% calculated on the total composition
- a plant protein;
wherein the product does not contain more than 0.01 wt.% of added mono- or di fatty acid glyceride esters.

10. Edible fat product according to claim 9, wherein the plant protein is selected form the group consisting of Broad bean (Vicia faba), Chickpea (Cicer arietinum), Lentil (Lens culinaris), Canola (B. napus subsp. napus) and/or almond (Prunus dulcis, syn. Prunus amygdalus).

## Patentansprüche

1. Verfahren zur Herstellung eines essbaren Emulsionsprodukts mit durchgehender Fettphase, wie etwa eines Aufstrichs, umfassend:
- 45-80 Gew.-% einer wässrigen Phase,
- 20-55 Gew.-% einer Fettphase und
- ein Pflanzenprotein,
wobei die Fettphase 8-15 Gew.-% Phytosterinester und 1 bis 20 Gew.-% eines Strukturierungsfetts umfasst, wobei Gew.-% auf das Gesamtprodukt berechnet ist;
wobei das Verfahren die folgenden Schritte umfasst:
- die Herstellung einer Mischung, die die wässrige Phase und die Fettphase umfasst, und
- die Herstellung des Emulsionsprodukts durch Emulgieren der Mischung aus der wässrigen Phase und der Fettphase,
wobei das Emulsionsprodukt nicht mehr als 0,01 Gew.-% zugesetzte Mono- oder Difettsäureglyceridester enthält.

2. Verfahren nach Anspruch 1, wobei mindestens ein Teil des Phytosterinesters zu der Mischung aus der wässrigen Phase und der Fettphase gegeben wird.

3. Verfahren nach Anspruch 1 oder 2, wobei mindestens ein Teil des Phytosterinesters in dem Emulgierschritt zugegeben wird.

4. Verfahren nach den Ansprüchen 1-3, wobei das Produkt einen natürlichen Emulgator umfasst.

5. Verfahren nach den Ansprüchen 1-4, wobei das Pflanzenprotein aus der aus Ackerbohne (Vicia faba), Kichererbse (Cicer arietinum), Linse (Lens culinaris), Raps (B. napus subsp. napus) und/oder Mandel (Prunus dulcis, Syn. Prunus amygdalus) bestehenden Gruppe ausgewählt ist.

6. Verfahren nach den Ansprüchen 1-5, wobei das Produkt weiterhin 0,1-10 Gew.-%, berechnet auf die Gesamtzusammensetzung, eines Verdickungsmittels umfasst.

7. Verfahren nach den Ansprüchen 1-6, wobei das Mischen durch eine Kombination aus einem oder mehreren Schabewärmetauschern und gekühlten Stabrührern erfolgt.

8. Verfahren nach den Ansprüchen 1-7, wobei die Temperatur in dem letzten des einen oder der mehreren Schabewärmetauscher 4-11, bevorzugt 4-9, besonders bevorzugt 4-7 Grad Celsius beträgt.

9. Essbares Fettprodukt, wie etwa ein Aufstrich, umfassend
- 45 - 80 Gew.-% einer wässrigen Phase und
- 20 - 55 Gew.-% einer Fettphase, wobei die Fettphase 8-15 Gew.-% Phytosterinester und 1 bis 20 Gew.-% eines Strukturierungsfetts umfasst, wobei Gew.-% auf die Gesamtzusammensetzung berechnet ist,
- ein Pflanzenprotein,
wobei das Produkt nicht mehr als 0,01 Gew.-% zugesetzte Mono- oder Difettsäureglyceridester enthält.

10. Essbares Fettprodukt nach Anspruch 9, wobei das Pflanzenprotein aus der aus Ackerbohne (Vicia faba), Kichererbse (Cicer arietinum), Linse (Lens culinaris), Raps (B. napus subsp. napus) und/oder Mandel (Prunus dulcis, Syn. Prunus amygdalus) bestehenden Gruppe ausgewählt ist.

## Revendications

1. Procédé de préparation d'un produit comestible de type émulsion à phase continue grasse tel qu'une pâte à tartiner, comprenant :
- 45 à 80 % en poids d'une phase aqueuse,
- 20 à 55 % en poids d'une phase grasse et
- des protéines végétales,
dans lequel la phase grasse comprend 8 à 15 % en poids d'esters de stérols végétaux et 1 à 20 % en poids d'une matière grasse structurante, les % en poids étant par rapport au produit total ;
le procédé comprenant les étapes de :
- préparation d'un mélange comprenant la phase aqueuse et la phase grasse ; et
- préparation du produit de type émulsion par émulsification du mélange de la phase aqueuse et de la phase grasse,
dans lequel le produit de type émulsion ne contient pas plus de 0,01 % en poids d'esters monoglycérides ou diglycérides d'acides gras ajoutés.

2. Procédé selon la revendication 1, dans lequel au moins une partie de l'ester de stérol végétal est ajouté au mélange de la phase aqueuse et de la phase grasse.

3. Procédé selon la revendication 1 ou 2, dans lequel au moins une partie de l'ester de stérol végétal est ajouté à l'étape d'émulsification.

4. Procédé selon les revendications 1 à 3, dans lequel le produit comprend un émulsifiant naturel.

5. Procédé selon les revendications 1 à 4, dans lequel les protéines végétales sont choisies dans le groupe constitué par les fèves (Vicia faba), les pois chiches (Cicer arietinum), les lentilles (Lens culinaris), le colza (B. napus subsp. napus) et/ou les amandes (Prunus dulcis, syn. Prunus amygdalus).

6. Procédé selon les revendications 1 à 5, dans lequel le produit comprend en outre 0,1 à 10 % en poids d'un épaississant, par rapport à la composition totale.

7. Procédé selon les revendications 1 à 6, dans lequel le mélange se fait par une combinaison d'un ou plusieurs échangeurs de chaleur à surface raclée et agitateurs à broches refroidis.

8. Procédé selon les revendications 1 à 7, dans lequel la température dans le dernier des un ou plusieurs échangeurs de chaleur à surface raclée est comprise entre 4 et 11, de préférence entre 4 et 9, plus préférablement entre 4 et 7 degrés Celsius.

9. Produit de type matière grasse comestible tel qu'une pâte à tartiner comprenant
- 45 à 80 % en poids d'une phase aqueuse et
- 20 à 55 % en poids d'une phase grasse, la phase grasse comprenant 8 à 15 % en poids d'esters de stérols végétaux et 1 à 20 % en poids d'une matière grasse structurante, les % en poids étant par rapport à la composition totale
- des protéines végétales ;
le produit ne contenant pas plus de 0,01 % en poids d'esters monoglycérides ou diglycérides d'acides gras ajoutés.

10. Produit de type matière grasse comestible selon la revendication 9, dans lequel les protéines végétales sont choisies dans le groupe constitué par les fèves (Vicia faba), les pois chiches (Cicer arietinum), les lentilles (Lens culinaris), le colza (B. napus subsp. napus) et/ou les amandes (Prunus dulcis, syn. Prunus amygdalus).
